# EUROPÄISCHE PATENTSCHRIFT

(11) **EP 2 499 922 B1**
(45) Veröffentlichungstag und Bekanntmachung des Hinweises auf die Patenterteilung: **28.08.2013**
(21) Anmeldenummer: 11002117.7
(22) Anmeldetag: 15.03.2011
(51) Int. Cl.: A23K 1/00, A23K 1/18

(54) **Fleischbasiertes halbfeuchtes Futtermittelprodukt und Verfahren zu seiner Herstellung**
Meat-based semi-moist food product and method for its production
Produit de moyen de fourrage semi-humide à base de viande et son procédé de fabrication

(43) Veröffentlichungstag der Anmeldung: 19.09.2012
(73) Patentinhaber: Vitakraft-Werke Wührmann & Sohn GmbH & Co. KG, 28295 Bremen (DE)
(72) Erfinder: Gardewin, Heinz Johannes, 26215 Oldenburg (DE)
(74) Vertreter: Lins, Martina

(56) Entgegenhaltungen:
- EP-A1- 0 121 813
- WO-A1-93/05666
- DE-A1-102006 031 794
- GB-A- 1 456 433
- US-A- 3 622 353
- US-A- 3 765 902
- US-A1- 2009 035 419
- US-B1- 6 238 726
- DATABASE gnpd [Online] Mintel; Februar 2011 (2011-02), Anonymous: "Beef Sticks for Dogs", XP002638582, gefunden im www.gnpd.com Database accession no. 1496752

## Beschreibung

Die Erfindung betrifft ein Verfahren zur Herstellung eines fleischbasierten, getreldefreien halbfeuchten Futtermittelprodukts durch Extrusion, ein mit dem Verfahren erhältliches halbfeuchtes (Semi-Moist)-Futtermittelprodukt mit einem Gehalt von wenigstens 80 Gew.-% an frischem oder vorbehandeltem Fleisch und die Verwendung dieses Futtermittels für Katzen, Hunde und andere fleischfressende Haustiere in Form von Vollfutter oder Snacks.

Unter Halbfeucht-Futter wird ein Futter verstanden, dessen Feuchte zwischen dem von Trockenfutter und Feuchtfutter liegt. Trockenfutter enthält in der Regel zwischen 6 und 10 Gew.-% Wasser (Restfeuchte 6 bis 10%). Demgegenüber enthalten halbfeuchte Produkte zwischen 15 und 50 Gew.-% Wasser.

Katzen und Hunde sind carnivore Spezies, die sich in der Natur hauptsächlich von Fleisch, d.h. von Beutetieren einschließlich Mageninhalt, ernähren. Fleisch und auch Fisch, d.h. tierische Proteine, sind außerdem ein hoher Akzeptanzträger bezogen auf das Fressverhalten der Tiere. Daher ist es ernährungsphysiologisch sinnvoll ein Futtermittel mit hohem Fleischgehalt, eventuell angereichert mit Fisch, und damit mit einem hohen Gehalt an tierischen Proteinen zu entwickeln, das gleichzeitig ohne Getreide oder Getreideprodukte auskommt und damit einen sehr niedrigen Gehalt an Kohlenhydraten besitzt.

Übliches Haustierfutter (pet food) enthält hingegen bei den Trocken- und Halbfeucht-Produkten einen nicht unbeträchtlichen Anteil an Getreide oder Getreidezutaten, insbesondere Stärke, obwohl diese Bestandteile größtenteils nicht zur natürlichen Nahrung der so gefütterten Tiere zählen. Außerdem hat man heute erkannt, dass für carnivore Tiere reine Fleischmahlzeiten für die Gesundheit wichtig sind. Über Frischfutter und Dosenfutter hinaus besteht daher ein Bedarf für Vollfutter und Snacks mit sehr hohem Fleischanteil, die keine Getreideprodukte und vorzugsweise auch keinen Zucker enthalten.

Halbfeuchte Futterprodukte werden häufig durch Kochextrusion erhalten. Derartige Verfahren werden seit langem für verschiedene Lebensmittelprodukte genutzt, so dass verfahrenstechnisch ausgereifte Verfahren und Apparaturen zur Verfügung stehen. Ein Beispiel für ein Kochextrusionsverfahren gibt die DE 36 36 867 an.

Textur, Elastizität und Aussehen der extrudierten Produkte hängen sowohl von den Inhaltsstoffen als auch von den Extrusionsbedingungen ab. Durch den Extruder wird thermische und mechanische Energie eingebracht. Scherkräfte wirken auf das extrudierte Gut, das in einem Schritt vermengt, geknetet und gefördert wird. Bei der Kochextrusion tritt häufig eine Expansion ein, der jedoch durch den Aufbau eines Kompressionsdrucks im Extruder entgegengewirkt werden kann.

Das halbfeuchte Futterprodukt kann am Ausgang des Extruders durch eine Düse zu einem Strang verpresst werden, der danach geschnitten und gegebenenfalls getrocknet werden kann. Gewünscht ist eine Konsistenz, in der das Produkt einen guten Zusammenhalt besitzt, ohne zu hart, spröde, trocken oder brüchig zu sein. Angestrebt wird ein weiches, feuchtes, elastisches und dennoch festes, nicht zerfließendes oder zerfallendes Produkt, das in seiner Konsistenz der von natürlichen Frischfleischstücken nahe kommt.

Die US 4,190,679 offenbart ein weiches elastisches Tierfutterprodukt aus fleischähnlichen Stücken, das mit einem Kochextrusionsverfahren hergestellt wird. Zum Einstellen der gewünschten Textur werden Getreidemehle in Verbindung mit einem plastifizierenden Polyol verwendet.

Die US 3,380,832 gibt ein Kochextrusionverfahren an, bei dem auf die Stärke verzichtet werden kann, wenn der Zusammenhalt innerhalb des Produkts durch einen Kaseinklebstoff wie Natriumkasein gewährleistet wird. Für ein naturähnliches Futterprodukt für Fleischfresser ist jedoch die Anwesenheit von Kasein und anderen Bindemitteln unerwünscht.

Ein hallfeuchtes Futtermittelprodukt für Hunde unit einem Fleischanteil vas 95% ("Meaty Sticks" Pedigree™) war zum Anmeldezeitpunkt bekannt (Datenbank GNPD, Mintel, Feb. 2011, Datenbank-No : 1496752, XP002638582).

Die Aufgabe der Erfindung besteht daher darin, ein ernährungsphysiologisch geeignetes, natürlichem Futterfleisch ähnliches, halbfeuchtes Futtermittel mit sehr hohem Fleischgehalt, guter Akzeptanz und ansprechender Struktur zur Verfügung zu stellen, das keine Getreideanteile oder Getreideprodukte enthält. Weiterhin soll das halbfeuchte Futtermittel möglichst frei von Bindemitteln sein.

Die Aufgabe wird gemäß Ansprüchen 1-15 gelöst mit einem Verfahren zur Herstellung eines fleischbasierten halbfeuchten Futtermittelprodukts durch Extrusion, bei welchem ein Extruder mit wenigstens folgenden Zutaten beschickt wird:
a) wenigstens einem Bestandteil der Gruppe Trockenfleisch, Fleischmehl, Trockenfisch, Fischmehl,
b) Fleisch und/oder Fisch,
c) ggf. Wasser oder Dampf, sofern nicht bereits ein ausreichender Wassergehalt durch Fleisch und/oder Fisch bereitgestellt wird,

unter Ausschluss von Getreide, Getreideprodukten und konzentriertem pflanzlichem Eiweiß, wobei die Bestandteile a), b) und c) zusammen wenigstens 80 Gew.-% der Zutatenmasse ausmachen,
und dass die Zutaten unter thermischer und mechanischer Energiezufuhr vermengt und durch eine Düse zu einem Strang gepresst werden, wobei in wenigstens einer Zone des Extruders ein Druck von 2 - 4 MPa (20 bis 40 bar) aufgebaut wird und die Masse über eine für die Einhaltung lebensmitteltechnischer Erfordernisse ausreichende Zeit einer Temperatur zwischen 80 und 130 °C, vorzugsweise zwischen 80 und 110 °C, ausgesetzt wird.

Bei der Extrusion handelt es sich hier insbesondere um eine sog. "Kochextrusion". Hierbei kommen in der Regel beheizbare Extruder zum Einsatz. Da die Temperaturen auch insgesamt unterhalb 100 °C liegen können, kann dieses Verfahren auch als Garextrusion bezeichnet werden. Bezüglich des Temperaturprofils sind verschiedene Behandlungsweisen für das Extrusionsgut vorstellbar. Je nach Extrusionsdauer und Wärmeprofil längs des Extruders kann beispielsweise bei insgesamt milden Temperaturen, dann vorzugsweise über eine längere Behandlungsdauer, extrudiert werden. Es kann auch eine kurze Zeit bei relativ hohen Temperaturen und im Übrigen bei geringeren Temperaturen behandelt werden. In einer bevorzugten Behandlungsform wird wenigstens in einem Abschnitt des Extruders eine Kerntemperatur des Extrusionsgutes von wenigstens 90 °C eingestellt.

Auch ohne die Anwesenheit von Stärke, anderen prozessierten Kohlehydraten oder Bindemitteln plastifiziert die thermische und mechanische Energieeinleitung durch den Extruder die Masse und bildet ein homogenes, in sich zusammenhaltendes, elastisches Produkt. Dies wird erfindungsgemäß durch das Zusammenwirken der trockenen und frischen Fleischbestandteile mit dem Wasser und/oder Dampf unter den Extrusionsbedingungen erreicht.

Fleisch und Fleischmehl können jeweils und unabhängig voneinander von unterschiedlichen Tierspezies stammen. Es können auch Mischungen mehrerer Arten von Fleisch und Fleischmehl bzw. von Frisch- und Trockenkomponenten eingesetzt werden.

Geeignete Sorten sind beispielsweise Geflügel, Rind, Lamm, Wild, Schwein.

"Fleisch" bedeutet hier: Alle Teile für die Tierfutterverarbeitung zugelassener, i.a. warmblütiger Tiere, wobei ausgenommen sind: Fell, Klauen, Haare, Horn, Federn, Zähne, Hufe, Schnäbel, Magen-Darm-Inhalt, zugefügtes Fett, zugefügtes Blut, zugefügte Knochen und Knochenmehle.

"Fisch" bedeutet hier: ganzer Fisch, frisch oder trocken, oder Teile davon.

Die Zutaten "Fleisch" und "Fisch" der Gruppe b) besitzen jeweils einen höheren Feuchtigkeitsgehalt als die Trockenzutaten der Gruppe a), und zwar vorzugsweise einen für Feuchtfuttermittel typischen Feutigkeitsgehalt, der insbesondere ein natürlicher oder annähernd natürlicher Feuchtegehalt ist. Bevorzugt handelt es sich bei den Zutaten aus Gruppe b) um Frischfleisch und/oder Frischfisch (auch gefroren).

"Trockenfleisch" bedeutet: durch Wasserentzug, auch in der Wärme, oder an der Luft getrocknetes Fleisch (stückig), "Trockenfisch" wird entsprechend verstanden. Trockenfleisch und Trockenfisch werden gegebenenfalls in vorbereitenden Schritten zerkleinert. Dies kann sich erübrigen, wenn das Material so spröde und brüchig ist, dass es beim Fördern und Zuführen in den Extruder genügend zerfällt.

"Fleischmehl" und "Fischmehl" sind feinvermahlene Trockenfleisch- und Trockenfischprodukte.

"Getreide" bedeutet hier: alle futtergeeigneten Bestandteile von Getreidepflanzen, insbesondere Körner.

"Getreideprodukte" bedeutet hier: jede Form von gemahlenem, grob zerkleinertem, bearbeitetem Getreide, wie Schrot, Kleie, Mehle und alle Arten von Auszogen, einschließlich Stärke und Stärkeprodukte.

"Konzentriertes pflanzliches Eiweiß" umfasst sämtliche pflanzlichen Zutaten mit einem hohen Eiweißgehalt, ca. ab 40 % i.Tr., insbesondere Soja und Sojaprotein, andere isolierte Proteine und Proteinhydrolysate.

Die Zutaten a) und/oder b) können in Weiterbildung der Erfindung mit Wasser vorgemischt oder mit Dampf vorkonditioniert werden. Andere Vorbereitungsmaßnahmen sind nicht ausgeschlossen. Das eingesetzte Fleisch oder der Fisch kann zunächst stückig geschnitten, mit Wasser vermischt, emulgiert und/oder vorplastifiziert werden. Je nach Ausgangsware kann alternativ auch Wasser entzogen werden.

Das Fleisch, entsprechend der Fisch oder Fischfleisch, kann vollständig oder teilweise gefroren eingesetzt werden, d.h. gefrorenes und frisches Fleisch können so gemischt werden, dass sich eine gekühlte Mischung ergibt. Es kann jedoch auch ausschließlich mit gefrorenem oder ausschließlich mit nicht gefrorenem Fleisch gearbeitet werden.

Das Gewichtsverhältnis von a) zu b) ist, ohne Berücksichtigung zugesetzten Wassers, vorzugsweise größer 0,8, weiter vorzugsweise größer 1, weiter vorzugsweise 3 : 1 bis 1 : 1, besonders bevorzugt 2,5 : 1 bis 1,5 : 1. Vorzugsweise sind in einem fischhaltigen Futtermittelprodukt mindestens 4 % Fisch enthalten.

Weiterhin können in der Futtermittelindustrie übliche Zusatzstoffe beigefügt werden, insbesondere Aromen, natürliche oder synthetische Farbstoffe, inaktivierte Hefe oder Hefe-Extrakte, Pflanzenextrakte und/oder -konzentrate, insbesondere Gemüseextrakte, wie Paprikaextrakt, Rote Bete-Extrakt, Sellerie-Extrakt, Möhrenextrakt, Tomatenextrakt, usw., Tomatenmark, Gemüsedicksaft.

Es können Konservierungsstoffe zugesetzt werden.

Das Verfahren wird alternativ dazu ohne Konservierungsstoffe durchgeführt. Durch die (Koch-)Extrusion ist das Produkt so, wie es den Extruder verlässt, zunächst hygienisch einwandfrei und kann unter darauf ausgerichteten Produktionsbedingungen lebensmitteltechnisch einwandfrei abgepackt werden. Um eine längere Haltbarkeit zu erreichen kann das Produkt anschließend in der Verpackung begast werden.

Der Zutatenmasse bzw. dem Extrusionsgut kann auch Zucker zugesetzt werden. Alternativ und derzeit bevorzugt wird kein Zucker zugesetzt, weiterhin bevorzugt kein Süßstoff und keine Zuckeraustauschstoffe.

In weiteren vorteilhaften Ausführungsformen können funktionelle Zutaten, wie beispielsweise Probiotika, zugesetzt werden. Hierunter werden u.a. Vitamine, Mineralstoffe, Omega-3-Fettsäuren, probiotische Ballaststoffe und probiotische Mikroorganismen verstanden.

Weiterhin ist es bevorzugt, keine Bindemittel wie Carragen, Gelatine, Agar Agar, Kaseinate bzw. kaseinbasierte Produktionshilfsstoffe oder Pektin zu verwenden.

Gemäß einer weiteren Ausführungsform der Erfindung werden als Zusatzstoff keine isolierten Cellulosen und keine mikrobiellen Polysaccharide eingesetzt.

Vorzugsweise werden keine Milchprodukte und kein Milcheiweiß zugesetzt.

Dem halbfeuchten Futtermittelprodukt sollten außerdem keine Emulgatoren zugesetzt werden, diese sind bei dem Verfahren nicht erforderlich. Ebenso wird vorzugsweise auf fermentativ wirkende Säuerungsmittel verzichtet, da diese die Struktur bzw. Struktur des Produktes verändern.

Das frisch erzeugte halbfeuchte Futtermittelprodukt besitzt vorzugsweise einen Feuchtegehalt von 15 bis 45 Gew.-%.

Das halbfeuchte Futtermittelprodukt kann beim Austritt aus dem Extruder geformt werden. Mit Hilfe speziell geformter Düsen (Düsenplatten) können besondere Strangquerschnitte realisiert werden.

Das Produkt kann nach Austritt aus dem Extruder weiter bearbeitet werden. Vorzugsweise ist vorgesehen, dass der extrudierte Futtermittelproduktstrang gechoppt oder geschnitten wird. Die so erhaltenen Strangabschnitte können unmittelbar abgepackt werden. Auf eine Trocknung kann verzichtet werden.

Das geschnittene, elastisch feuchte Produkt kann außerdem, falls gewünscht, thermisch nachgeformt werden. Auf diese Weise können mit Hilfe entsprechender Formwerkzeuge umgeformte Stücke, z.B. Kissen, erhalten werden. Auch können Formen aus den Strangabschnitten ausgestanzt werden.

Gemäß einer besonders bevorzugten Verfahrensweise wird die Extrusion mit einem 2-Wellen-Extruder oder auch 2-Schnecken-Extruder, auch als Doppelschneckenextruder bezeichnet, durchgeführt. Die Schnecken können ineinandergreifend ausgebildet sein und gleichlaufend oder gegenlaufend ausgebildet sein.

Das Verfahren wird bevorzugt mit einem Extruder betrieben, an dem während der Extrusion unterschiedlich temperierte Zonen eingestellt sind. Weiter vorzugsweise sind wenigstens eine Arbeitszone und wenigstens eine Kompressionszone vorhanden.

Aus dem Extruder kann Dampf bzw. Wasser abgezogen werden, und zwar besonders bevorzugt in oder unmittelbar vor der Endzone (falls vorhanden der Kompressionszone). Auch kann bei Bedarf Dampf an ein oder mehreren Zugabestellen längs des Extruders zugeführt werden. Beide Maßnahmen dienen dazu, um den gewünschten Feuchtigkeitsgehalt einzustellen.

Als besonders vorteilhaft wird es derzeit angesehen, wenn der spezifische mechanische Energieeintrag (SME) während der Extrusion zwischen 10 und 150 Wh/kg, weiter bevorzugt 30 bis 80 WH/kg beträgt. Der SME ist ein gutes Maß für den Einfluss der Extrusionsbedingungen auf Struktur bzw. Textur des Produktes.

Insbesondere mit dem vorstehend beschriebenen Verfahren wird ein neues halbfeuchtes Futtermittelprodukt erhalten, das fast ausschließlich aus Fleischbestandteilen, nämlich frischem oder feucht-konserviertem (z.B. gefrorenem) und getrocknetem, ggf. zu Mehl vermahlenen Fleisch (ggf. einschließlich Fisch), und Wasser besteht. In den bevorzugten Ausführungsformen besitzt das Futtermittel-Produkt - so, wie es aus dem Extruder erhalten wird, oder frisch nach einer Nachbehandlung - einen Gehalt von wenigstens 80 Gew.-% an Fleischbestandteilen, nämlich frischem oder vorbehandeltem Fleisch. In besonders bevorzugten Beispielen enthält das Produkt wenigstens 90 Gew.-% an Fleischbestandteilen, wobei jeweils Frischfischanteile zu den Fleischanteilen gerechnet werden. Das Futtermittelprodukt kann in stückiger Form, beispielsweise in fressgerechten Stücken, vorliegen bzw. erzeugt werden.

Das halbfeuchte Futtermittelprodukt kann mit natürlichen Farbstoffen ein- oder mehrfarbig eingefärbt sein. Vorzugsweise wird es in eine Folienverpackung, insbesondere eine Schlauchbeutelverpackung oder eine Muldenschalenverpackung eingeschlossen und ist weiter vorzugsweise begast.

Das neue halbfeuchte Futtermittelprodukt kann außerdem mit anderen Futtermittelprodukten in Verkaufseinheiten zusammengeschlossen werden oder in gemischten Futtermitteln angeboten werden.

Das halbfeuchte Futtermittelprodukts nach dieser Erfindung kann besonders vorteilhaft als Katzenfutter, Hundefutter oder Futter für andere fleischfressende Haustiere in Form von Vollfutter oder von Snacks verwendet werden.

Die Erfindung umfasst weiterhin Verpackungseinheiten, die neben dem halbfeuchten Futtermittelprodukt selbst innerhalb eines Verpackungsvolumens mit dem Futtermittel oder separat in einem zusätzlichen Kompartiment der Verpackung eine Soße (gravy) enthalten.

Im Folgenden wird die Erfindung anhand von Verfahrens- und Rezepturbeispielen näher beschrieben, die den Anwendungsbereich und die möglichen Ausführungsvarianten der Erfindung näher illustrieren sollen. Anhand der vorstehenden Ausführungen kann der Fachmann weitere Ausführungsmöglichkeiten mit Hilfe seines Fachwissens auffinden.

### REZEPTURBEISPIELE

### (alle Angaben in Gew.-%)

### Beispiel 1

| | |
|---|---|
| Fleischmehle (z.B. Rind, Schwein, Geflügel) | 55,00 |
| Fleisch und tierische Nebenerzeugnisse (frisch und gefroren), (z.B. Rind, Lamm, Wild, Geflügel) | 35,00 |
| Fisch und Fischnebenerzeugnisse (gefroren oder Fischmehl) | 4,00 |
| Hefe (inaktiviert) | 3,00 |
| Mischung natürlicher Aromen | 2,00 |
| pflanzliche Extrakte (z.B. Paprikaextrakt) | 1,00 |

### Beispiel 2

| | |
|---|---|
| Fleischmehle (z.B. Rind, Schwein, Geflügel) | 58,00 |
| Fleisch und tierische Nebenerzeugnisse (frisch und gefroren), (z.B. Rind, Lamm, Wild, Geflügel) | 37,00 |
| pflanzliche Extrakte (z.B, Rote Bete Extrakt) | 2,00 |
| Mischung natürlicher Aromen | 2,00 |
| Hefe (inaktiviert) | 1,00 |

### Beispiel 3

| | |
|---|---|
| Fleischmehle (z.B. Rind, Schwein, Geflügel) | 69,00 |
| Fleisch und tierische Nebenerzeugnisse (frisch und gefroren), (z.B. Rind, Lamm, Wild, Geflügel) | 28,00 |
| Mischung natürlicher Aromen | 2,00 |
| Hefe (inaktiviert) | 1,00 |

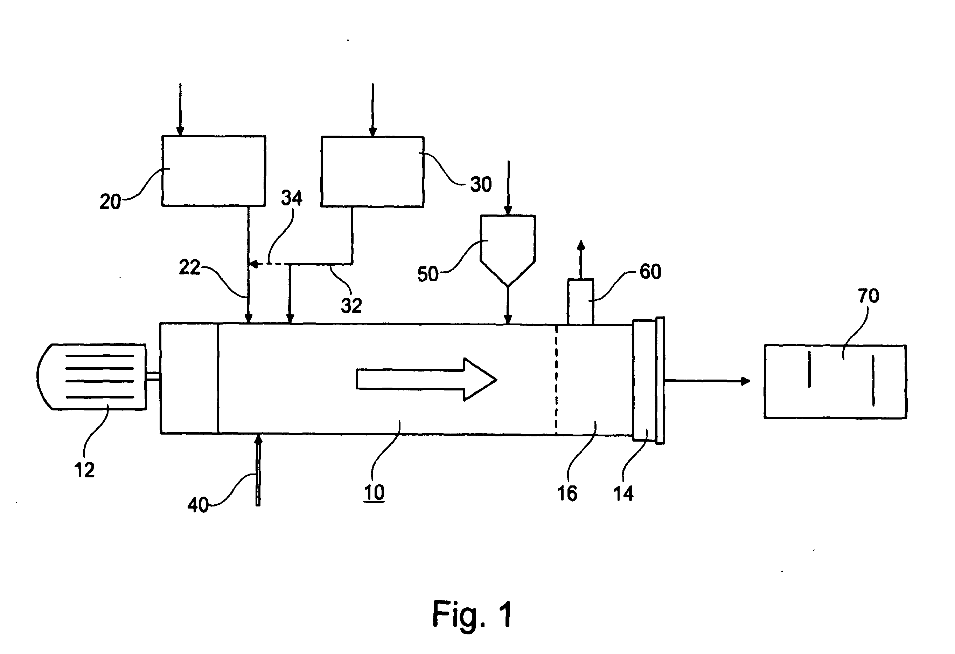

Figur 1 zeigt eine schematische Darstellung des Extrusionsverfahrens nach dieser Erfindung.

Das halbfeuchte Futterprodukt wird auf einem 2-Wellen-Garextruder 10 mit einem Antrieb 12 und einer ausgangs angeordneten Düsenplatte 14 hergestellt, der mit mehreren unterschiedlich temperierbaren, hier nicht im Einzelnen dargestellten Zonen ausgestattet ist. Die Förderrichtung verläuft in der Abbildung von links nach rechts. Längs des Arbeitsweges werden zuerst die Fleischbestandteile aufgeben. Die Frischfleischzutaten befinden sich in Behälter 20 und werden von dort dem Extruder 10 zugeführt. Die Förderung erfolgt mit einer nicht näher dargestellten Pumpe 22 (Schlauchpumpe oder Schneckenpumpe). Anstelle des Behälters 20 kann auch ein Konditionierer, z.B. ein Schneidrührer oder Emulgiergerät vorgesehen sein. Dabei wird das frische Fleisch gemeinsam mit gefrorenem Frischfleisch fein zerkleinert und voremulgiert, um die Partikelgröße zu verringern und die Konsistenz, besonders, falls Knochenreste und Knorpel vorhanden sind, zu vergleichmäßigen. Der Behälter 20 oder der Konditionierer können gekühlt werden, was sich jedoch erübrigen kann, wenn dem Frischfleisch gefrorenes Fleisch zugesetzt wird oder wenn ausschließlich gefrorenes Fleisch verwendet wird.

Fein vermahlenes Fleischmehl wird aus einem Schüttguttbehälter 30 oder einem Sack über die Förderstrecke 32 dem Extruder 10 zugeführt. Das Fleischmehl kann dem Extruder entweder separat zugerührt werden, oder es wird vorab mit der Frischfleischkomponente vermengt, wie dies mit Hilfe einer gestrichelt gezeichneten Verbindungsleitung 34 angedeutet ist.

Sofern mehrere Frischfleischzutaten und/oder mehrere Fleisch- oder Fischmehle verwendet werden, können parallel jeweils mehrere Behälter 20 und 30 vorgesehen sein.

Über Zugabestellen 40 kann Wasser zugeführt werden. Alternativ wird Wasser über die Frischfleischemulsion, die mit zusätzlich zugefügtem Wasser hergestellt werden kann, in das Verfahren bzw. den Extruder 10 eingeführt. Die Bestandteile a), b) und c) der Ausgangsmischung für das Futtermittel werden also in nahe beieinander liegenden Zugabestellen oder auch bereits vorvermischt zugeführt. Sie durchlaufen dann gemeinsam die Arbeitsstrecke des Extruders 10 und werden vermengt. Der entstehenden Masse wird, vermittelt durch die Bearbeitung mit einer Schnecke oder Doppelschnecke, mechanische Energie mit Hilfe von Scherkräften zugeführt. Stromabwärts der Zugabepunkte befinden sich ein oder mehrere temperierbare Zonen des Extruders. Dort wird zusätzlich thermische Energie eingebracht. Das Extrusionsgut wird während des Vermischens und der mechanischen Bearbeitung gegart, die Proteine werden hierbei denaturiert. Sofern nicht Aromen und weitere Zutaten mit in den Frischfleisch-Behälter 20 zugegeben wurden, können sie dem Extruder 10 stromabwärts der Hauptzutatenzugabe aus dem Behälter 50 zugeführt werden. Je nach Temperaturprofil kann dies sinnvoll sein, beispielsweise um Aromen zu schonen. In einem Kompressionsbereich 16 des Extruders 10 findet eine Kompression statt und der Druck erhöht sich kurz vor der Ausgangsdüsenplatte 14. In diesem Beispiel wird in der Extruder-Endzone, bis kurz vor dem Austritt des Extrudats, ein Druck von 25 bis 35 bar eingestellt. Für die Druckregulation kann im Kompressionsbereich 16 oder unmittelbar davor ein Dampfventil 60 vorgesehen sein. Wasserdampf wird entzogen, es findet keine Expansion des Produktes statt.

Mit Hilfe ausgewählter Düsenplatten 14 ist eine Formgebung des Extruslonsstranges möglich, so dass sich beispielsweise ein herzförmiger oder sternförmiger Querschnitt ergibt. Im Anschluss an die Düsenplatte 14 sind rotierende Messer angeordnet, die den extrudierten Produktstrang zu Futterkörpern beliebiger Länge schneiden. Die Größe der Futtermittelkörper wird so eingestellt, dass sie durch das Tier optimal aufgenommen werden können.

Das Endprodukt, also das halbfeuchte Futtermittel wird nach Verlassen des Extruders Nachbearbeitungs- und/oder Abpackeinheiten, hier pauschal mit 70 bezeichnet, zugeführt.

### Prozessparameter:

Schneckenantrieb: 500 upm;
Druck während der Mischphase: 20 bis 30 bar;
Druck während der Kompressionsphase: 25 bis 35 bar;
Prozesstemperatur in endnaher Zone: 80 bis 95 °C

## Patentansprüche

1. Verfahren zur Herstellung eines fleischbasierten halbfeuchten Futtermittelprodukts durch Extrusion, **dadurch gekennzeichnet,**
**dass** ein Extruder mit wenigstens folgenden Zutaten beschickt wird:
a) wenigstens einem Bestandteil der Gruppe Trockenfleisch, Fleischmehl, Trockenfisch, Fischmehl,
b) Fleisch und/oder Fisch,
c) ggf. Wasser oder Dampf, soweit nicht durch oder in Verbindung mit a) oder b) eingebracht,
unter Ausschluss von Getreide, Getreideprodukten und konzentriertem pflanzlichem Eiweiß, wobei die Bestandteile a), b) und c) zusammen wenigstens 80 Gew.-% der Zutatenmasse ausmachen,
und **dass** die Zutaten unter thermischer und mechanischer Energiezufuhr vermengt und durch eine Düse zu einem Strang gepresst werden, wobei in wenigstens einer Zone des Extruders ein Druck von 2 - 4 MPa (20 bis 40 bar) aufgebaut wird und die Masse über eine für die Einhaltung lebensmitteltechnischer Erfordernisse ausreichende Zeit einer Temperatur zwischen 80 und 130 °C ausgesetzt wird.

2. Verfahren nach Anspruch 1, **dadurch gekennzeichnet, dass** die Zutaten a) und/oder b) mit Wasser vorgemischt oder mit Dampf vorkonditioniert werden.

3. Verfahren nach Anspruch 1 oder 2, **dadurch gekennzeichnet, dass** das Fleisch vollständig oder teilweise gefroren eingesetzt wird.

4. Verfahren nach einem der Ansprüche 1 bis 3, **dadurch gekennzeichnet, dass** das Gewichtsverhältnis von a) zu b) ohne Berücksichtigung zugesetzten Wassers größer 0,8 ist.

5. Verfahren nach einem der Ansprüche 1 bis 4, **dadurch gekennzeichnet, dass** in der Futtermittelindustrie übliche Zusatzstoffe beigefügt werden, insbesondere Aromen, natürliche oder synthetische Farbstoffe, inaktivierte Hefe oder Hefeextrakte, Pflanzenextrakte und/oder -konzentrate, Konservierungsstoffe, Zucker, funktionelle Zutaten, jedoch keine Bindemittel wie Carragen, Gelatine, Agar Agar, Pektin und keine Emulgatoren.

6. Verfahren nach einem der Ansprüche 1 bis 5, **dadurch gekennzeichnet, dass** das Endprodukt einen Feuchtegehalt von 15 bis 45 Gew.-% besitzt.

7. Verfahren nach einem der Ansprüche 1 bis 6, **dadurch gekennzeichnet, dass** der extrudierte Futtermittelproduktstrang geschnitten wird.

8. Verfahren nach Anspruch 7, **dadurch gekennzeichnet, dass** das geschnittene, elastisch feuchte Produkt thermisch nachgeformt wird.

9. Verfahren nach einem der Ansprüche 1 bis 8, **dadurch gekennzeichnet, dass** an dem Extruder während der Extrusion unterschiedlich temperierte Zonen eingestellt sind und dass wenigstens eine Arbeitszone und wenigstens eine Kompressionszone vorhanden sind.

10. Verfahren nach einem der Ansprüche 1 bis 9, **dadurch gekennzeichnet, dass** der spezifische mechanische Energieeintrag (SME), der während der Extrusion eingebracht wird, zwischen 10 und 150 Wh/kg beträgt.

11. Halbfeuchtes stückiges Futtermittelprodukt erhältlich durch ein Verfahren nach einem der Ansprüche 1 bis 10 als extrudierter und geschnittener Futtermittelproduktstrang, wobei das Futtermittelprodukt einen Gehalt von wenigstens 80 Gew.-% an Fleischbestandteilen, unter Ausschluss von Getreide, Getreideprodukten, konzentriertem pflanzlichem Eiweiß, Stärke und sonstigen Bindemitteln aufweist.

12. Halbfeuchtes Futtermittelprodukt nach Anspruch 11, **dadurch gekennzeichnet, dass** es mit natürlichen Farbstoffen ein- oder mehrfarbig eingefärbt ist.

13. Halbfeuchtes Futtermittelprodukt nach Anspruch 11 oder 12, **dadurch gekennzeichnet, dass** es in eine Folienverpackung, insbesondere eine Schlauchbeutelverpackung, eine Muldenschalenverpackung oder eine Dose eingeschlossen ist.

14. Verwendung des halbfeuchten Futtermittelprodukts nach einem der Ansprüche 11 bis 13 als Katzenfutter, Hundefutter wie Vollfutter oder Snacks, oder Futter für andere fleischfressende Haustiere.

15. Verpackungseinheit für ein halbfeuchtes Futtermittelprodukt nach einem der Ansprüche 11 bis 13, auch in der Verwendung nach Anspruch 14, **dadurch gekennzeichnet, dass** die Verpackungseinheit innerhalb eines Verpackungsvolumens mit dem halbfeuchten Futtermittel oder separat in einem zusätzlichen Kompartiment der Verpackung eine Soße (gravy) enthält.

## Claims

1. Method for production of a meat-based, semi-moist animal food product by extrusion, **characterized in that** an extruder is charged with at least the following ingredients:
a) at least one component of the group dry meat, meat meal, dry fish, fish meal,
b) meat and/or fish,
c) optionally water or steam, where not introduced by or in combination with a) or b),
with the exclusion of cereals, cereal products and concentrated vegetable protein, wherein the components a), b) and c) together make up at least 80% by weight of the mass of ingredients,
and **in that** the ingredients are mixed with supply of thermal and mechanical energy and are pressed through a die to form an extrudate, wherein in at least one zone of the extruder a pressure of 2-4 MPa (20 to 40 bar) is built up and the mass is subjected to a temperature between 80 and 130°C for a time that is sufficient to comply with food-processing requirements.

2. Method according to Claim 1, **characterized in that** the ingredients a) and/or b) are premixed with water or preconditioned with steam.

3. Method according to Claim 1 or 2, **characterized in that** the meat is used completely or in part in the frozen state.

4. Method according to any one of Claims 1 to 3, **characterized in that** the weight ratio of a) to b) without taking into account added water is greater than 0.8.

5. Method according to any one of Claims 1 to 4, **characterized in that** additives that are customary in the animal foodstuff industry are added, in particular flavourings, natural or synthetic dyes, inactivated yeast or yeast extracts, plant extracts and/or plant concentrates, preservatives, sugars, functional ingredients but no binders such as carrageenan, gelatin, agar-agar, pectin, and no emulsifiers.

6. Method according to any one of Claims 1 to 5, **characterized in that** the end product has a moisture content of 15 to 45% by weight.

7. Method according to any one of Claims 1 to 6, **characterized in that** the extruded animal food product extrudate is sliced.

8. Method according to Claim 7, **characterized in that** the sliced, elastically moist product is thermally reshaped.

9. Method according to any one of Claims 1 to 8, **characterized in that**, at the extruder during the extrusion, zones that are brought to and maintained at different temperatures are established, and **in that** at least one working zone and at least one compression zone are present.

10. Method according to any one of Claims 1 to 9, **characterized in that** the specific mechanical energy (SME) input which is introduced during the extrusion is between 10 and 150 Wh/kg.

11. Semi-moist piece-form animal food product obtainable by a method according to any one of Claims 1 to 10 as extruded and sliced animal food product extrudate, wherein the animal food product has a content of at least 80% by weight of meat components, with the exclusion of cereals, cereal products, concentrated vegetable protein, starch, and other binders.

12. Semi-moist animal food product according to Claim 11, **characterized in that** it is coloured in one colour or is multicoloured using natural dyes.

13. Semi-moist animal food product according to Claim 11 or 12, **characterized in that** it is enclosed in a film package, in particular a flexible pouch package, a deep-tray package or a tin.

14. Use of the semi-moist animal food product according to any one of Claims 11 to 13 as cat food, dog food, such as complete animal food or snacks, or animal food for other carnivorous pets.

15. Packing unit for a semi-moist animal food product according to any one of Claims 11 to 13, also in the use according to Claim 14, **characterized in that** the packaging unit, within a package volume contains a sauce (gravy) together with the semi-moist animal foodstuff, or separately in an additional compartment of the package.

## Revendications

1. Procédé pour la fabrication par extrusion d'un aliment pour animaux semi-humide à base de viande, **caractérisé en ce qu'**une extrudeuse est alimentée au moins en les ingrédients suivants :
a) au moins un constituant du groupe formé par la viande sèche, la farine de viande, le poisson sec, la farine de poisson,
b) de la viande et/ou du poisson,
c) le cas échéant de l'eau ou de la vapeur, pour autant qu'elle n'est pas introduite par ou en association avec a) ou b),
à l'exclusion de céréales, de produits céréaliers et de protéines végétales concentrées, les constituants a), b) et c) représentant ensemble au moins 80% en poids de la masse d'ingrédients,
et **en ce que** les ingrédients sont mélangés sous apport d'énergie thermique et mécanique et pressés via une buse en un brin, une pression de 2-4 MPa (20 à 40 bars) étant développée dans au moins une zone de l'extrudeuse et la masse étant soumise pendant un temps suffisant pour respecter les exigences techniques alimentaires à une température entre 80 et 130°C.

2. Procédé selon la revendication 1, **caractérisé en ce que** les ingrédients a) et/ou b) sont mélangés au préalable avec de l'eau ou conditionnés par de la vapeur.

3. Procédé selon la revendication 1 ou 2, **caractérisé en ce que** la viande est utilisée sous forme complètement ou partiellement congelée.

4. Procédé selon l'une quelconque des revendications 1 à 3, **caractérisé en ce que** le rapport pondéral de a) à b) est supérieur à 0,8, sans tenir compte de l'eau ajoutée.

5. Procédé selon l'une quelconque des revendications 1 à 4, **caractérisé en ce que** des additifs usuels dans l'industrie des aliments pour animaux sont ajoutés, en particulier des arômes, des colorants naturels ou synthétiques, des levures inactivées ou des extraits de levure, des extraits et/ou des concentrats végétaux, des conservateurs, du sucre, des ingrédients fonctionnels, mais pas de liants tels que le carraghénane, la gélatine, l'agar agar, la pectine ni d'émulsifiants.

6. Procédé selon l'une quelconque des revendications 1 à 5, **caractérisé en ce que** le produit fini présente une teneur en humidité de 15 à 45% en poids.

7. Procédé selon l'une quelconque des revendications 1 à 6, **caractérisé en ce que** le brin d'aliment pour animaux extrudé est coupé.

8. Procédé selon la revendication 7, **caractérisé en ce que** le produit humide coupé, élastique, est post-moulé thermiquement.

9. Procédé selon l'une quelconque des revendications 1 à 8, **caractérisé en ce que** des zones de température différente sont réglées pendant l'extrusion dans l'extrudeuse et **en ce qu'**il existe au moins une zone de travail et au moins une zone de compression.

10. Procédé selon l'une quelconque des revendications 1 à 9, **caractérisé en ce que** l'apport d'énergie mécanique spécifique (EMS) qui est introduite pendant l'extrusion est situé entre 10 et 150 Wh/kg.

11. Aliment pour animaux en morceaux, semi-humide, pouvant être obtenu par un procédé selon l'une quelconque des revendications 1 à 10 sous forme de brin d'aliment pour animaux extrudé et découpé, l'aliment pour animaux présentant une teneur d'au moins 80% en poids en constituants de viande, à l'exception de céréales, de produits céréaliers, de protéines végétales concentrées, d'amidon et d'autres liants.

12. Aliment pour animaux semi-humide selon la revendication 11, **caractérisé en ce qu'**il est coloré en une ou plusieurs teintes au moyen de colorants naturels.

13. Aliment pour animaux semi-humide selon la revendication 11 ou 12, **caractérisé en ce qu'**il est enfermé dans un emballage en feuille, en particulier un emballage en sac en boyau, un emballage en coque creuse ou une boîte.

14. Utilisation de l'aliment pour animaux semi-humide selon l'une quelconque des revendications 11 à 13 comme aliment pour chats, pour chiens, tel qu'aliment complet ou un snack, ou comme aliment pour animaux pour d'autres animaux domestiques consommant de la viande.

15. Unité d'emballage pour un aliment pour animaux semi-humide selon l'une quelconque des revendications 11 à 13, également dans l'utilisation selon la revendication 14, **caractérisée en ce que** l'unité d'emballage contient une sauce (gravy) dans un volume d'emballage avec l'aliment pour animaux semi-humide ou séparément dans un compartiment supplémentaire de l'emballage.
